# EUROPÄISCHE PATENTSCHRIFT

(11) **EP 0 864 083 B1**
(45) Veröffentlichungstag und Bekanntmachung des Hinweises auf die Patenterteilung: **23.10.2002**
(21) Anmeldenummer: 96939935.1
(22) Anmeldetag: 28.11.1996
(51) Int. Cl.: G01N 21/51, G01N 21/53, G01N 21/47

(54) **NEPHELOMETER**
NEPHELOMETER
NEPHELOMETRE

(30) Priorität: 30.11.1995 DE 19544645; 13.09.1996 DE 19637364
(43) Veröffentlichungstag der Anmeldung: 16.09.1998
(73) Patentinhaber: Thermo Labsystems Oy, 01620 Vantaa (FI)
(72) Erfinder: MOORE, Thomas, D-07747 Jena (DE)
(74) Vertreter: Hilleringmann, Jochen, Dipl.-Ing.
(86) Internationale Anmeldenummer: EP9605254
(87) Internationale Veröffentlichungsnummer: WO97020199

(56) Entgegenhaltungen:
- EP-A- 0 226 843
- DE-C- 881 877
- DE-C- 926 993

## Beschreibung

Die Erfindung betrifft die Anordnung verschiedener optischer und optoelektronischer Baugruppen zu einem nephelometrischen Meßgerät. Die Erfindung betrifft also die Anordnung verschiedener optischer und optoelektronischer Bauelemente und Baugruppen zu einem optischen Meßkanal zur Messung des Streulichtes von Proben. Dabei wird von einer nephelometrischen Anordnung ausgegangen, d.h. daß nur das von der Probe in einen bestimmten Raumwinkel gestreute Licht gemessen wird.

Klassische Nephelometer für flüssige Proben in Küvetten arbeiten wie folgt:
Die Probe wird in eine Küvette gefüllt und von Licht geringer Bandbreite und niedriger Divergenz durchstrahlt. Das durch die Probe gestreute Licht wird von einem Detektor, der rechtwinklig zur Durchleuchtungsrichtung angeordnet ist, gemessen.

Es gibt eine Vielzahl von Modifikationen dieses Prinzips:
So z.B. mit der Zielstellung, den Einfluß der Küvette auf das Hintergrundsignal zu verringen (DE-OS 29 07 000.) oder aber zusätzliche Aussagen durch die Messung des Streulichtes in mehreren Raumwinkelbereichen, z.B. 90° und 35°, zu gewinnen (DE-OS 29 20 276).

Besonders interessant sind Anordnungen, die auch matrixförmig angeordnete Proben, z.B. in sogenannten Mikrotitrationsplatten oder aber auf flachen transparenten Unterlagen, z.B. Glasplatten, vermessen können. Ein solches System, welches die Probe in senkrechter Richtung durchstrahlt und mit einer mechanischen Bewegungseinrichtung zur horizontalen Positionierung der Proben ausgerüstet werden kann, ist in DE-OS 35 35 652 beschrieben.

Das Prinzip dieser Anordnung besteht in der Kombination einer Beleuchtungsvorrichtung, die die Probe durchstrahlt, und einer Detektorvorrichtung mit einem Detektor und einer hochaperturigen Detektoroptik, die das Streulicht auf einen Detektor konzentriert. Dabei wird das direkt durch die Probe hindurchtretende Licht von einem Zentralabschattungselement in der Mittenzone der Detektoroptik absorbiert.

Diese Anordnung hat den Nachteil, daß das Signal sowohl bei Messungen in Luft als auch bei leerer Küvette unbefriedigend hoch ausfällt und die Empfindlichkeit insgesamt zu niedrig ist.

Aus DE-OS 24 09 273 ist eine optische Anordnung zum Messen von Antigen-Antikörper-Reaktionen bekannt, bei der von einer Probe ausgehendes Streulicht mittels einer Detektorvorrichtung erfaßt wird. Das von einer Beleuchtungsvorrichtung ausgesandte Licht durchleuchtet eine Probe, hinter der eine Lichtfalle zur Absorption von Direktlicht angeordnet ist. Innerhalb der Detektoroptik befindet sich auf der otpischen Achse der Anordnung eine schwarze Blende zum Ausblenden von Streulicht, das durch zwischen der Beleuchtungsvorrichtung und der Probe angeordneten Blenden entsteht.

Die Aufgabe besteht darin, diese Anordnung so zu gestalten, daß die Empfindlichkeit des Meßsystems hoch und frei von Hintergrundsignalen sowie die Nutzung von oben offenen Mehrfachgefäßen möglich ist. Ziel der Erfindung ist es also, mit hoher Empfindlichkeit und frei von störendem Hintergrundsignal matrixförmig angeordnete Proben in oben offenen Gefäßen nephelometrisch vermessen zu können.

Zur Lösung dieser Aufgabe wird mit der Erfindung ein Nephelometer zur optischen Erfassung des Streulichts einer mit Licht beaufschlagten Probe vorgeschlagen, das eine Beleuchtungsvorrichtung (nachfolgend auch Illuminator genannt) zum Beaufschlagen einer Probe mit Licht aufweist. Die Beleuchtungsvorrichtung ist ferner mit einer Lichtquelle, einer Austrittslinsenanordnung (nachfolgend auch mit Illuminatoroptik bezeichnet) und einer Austrittsöffnungsblende (nachfolgend auch mit Austrittspupille des Illuminators bezeichnet) versehen, die in dieser Reihenfolge auf einer gemeinsamen, von der Lichtquelle ausgehenden optischen Achse angeordnet sind. Zur Erfassung des von der Probe ausgehenden Streulichts ist eine Detektorvorrichtung vorgesehen. Diese Detektorvorrichtung weist ein Zentralabschattungselement auf, mit dem sich das direkt durch die Probe hindurchtretende Licht absorbieren läßt, so daß es nicht auf die Detektorvorrichtung und insbesondere nicht auf deren Detektor auftrifft. Die Detektorvorrichtung ist ferner mit einer Detektoreintrittslinsenanordnung (nachfolgend auch mit Detektoroptik bezeichnet) versehen. Ferner weist die Detektorvorrichtung ein zweites Abschattungselement auf, das zwischen der Detektoreintrittslinsenanordnung und dem Detektor angeordnet ist.

Erfindungsgemäß sind die Austrittsöffnungsblende der Beleuchtungsvorrichtung und die Eintrittslinsenanordnung sowie die beiden Abschattungselement der Detektorvorrichtung derart relativ zueinander angeordnet, daß sich das Zentralabschattungselement in einer zur Lichtquelle optisch konjugierten Ebene und das zweite Abschattungselement in einer zur Austrittsöffnungsblende optisch konjugierten Ebene befinden. Mit anderen Worten wird die Lichtquelle auf das Zentralabschattungselement abgebildet, während die Austrittsöffnungsblende auf das zweite Abschattungselement abgebildet wird.

Aufgabe des zweiten Abschattungselements ist es, dasjenige Licht, das nicht primär von der Probe gestreut ist, zu absorbieren. Bei diesem Licht handelt es sich um dasjenige Licht, das aus der Austrittsöffnungsblende der Beleuchtungsvorrichtung austritt, dort jedoch gebeugt wird oder innerhalb des Meßkanals gestreut wird und auf diese Weise gegebenenfalls unter Hindurchtreten durch die Probe auf die Detektorvorrichtung auftrifft. Dieses Falschlicht wird durch das zweite Abschattungselement absorbiert, gelangt also nicht auf den Detektor und kann damit auch das Meßergebnis nicht verfälschen.

Bei dem erfindungsgemäßen Nephelometer wird die Probe zwischen die Austrittsöffnungsblende der Beleuchtungsvorrichtung und das Zentralabschattungselement der Detektorvorrichtung angeordnet. Dabei wird die Probe auf den Detektor abgebildet, d.h. die Probe und der Detektor befinden sich in zueinander konjugierten Ebenen. Ferner sollte der Abstand zwischen der Austrittsöffnungsblende der Beleuchtungsvorrichtung und der Probe hinreichend groß sein. Würde beispielsweise die Austrittsöffnungsblende mit der Probe zusammenfallen, würde sämtliches Falschlicht vom Detektor aufgenommen. Um bei hinreichendem Abstand zwischen der Austrittsöffnungsblende und der Probe möglichst sämtliches Falschlicht aufzufangen, ist es zweckmäßig, das zweite Abschattungselement möglichst nahe dem Brennpunkt der Detektoreintrittslinsenanordnung anzuordnen. Dabei befindet sich das zweite Abschattungselement zwischen diesem Brennpunkt und dem Detektor.

Das Zentralabschattungselement sollte so klein wie möglich sein, damit auch das unter kleinstem Winkel zur optischen Achse von der Probe gestreute Licht den Detektor erreicht. Idealerweise sollte durch das Abschattungselement nur dasjenige Licht abgeschirmt werden, das sich auf der optischen Achse ausbreitet und durch die Probe direkt hindurchtritt (Direktlichtstrahl). Da das Abschattungselement in der zur Lichtquelle konjugierten Ebene liegt, müßte demzufolge auch die Lichtquelle klein sein. Dies wiederum wird vorteilhafterweise mit einem Laser erreicht, anstelle beispielsweise einer herkömmlichen Lichtquelle mit Heizwendel.

Weitere vorteilhafte Ausgestaltungen der Erfindung ergeben sich aus den Unteransprüchen.

Nachfolgend wird anhand der Figuren ein Ausführungsbeispiel der Erfindung näher erläutert. Im einzelnen zeigen:
- Fig. 1: den Strahlengang der nephelometrischen Meßanordnung mit einer konventionellen Lichtquelle und
- Fig. 2: den Strahlengang der nephelometrischen Meßanordnung mit einer Laserlichtquelle.

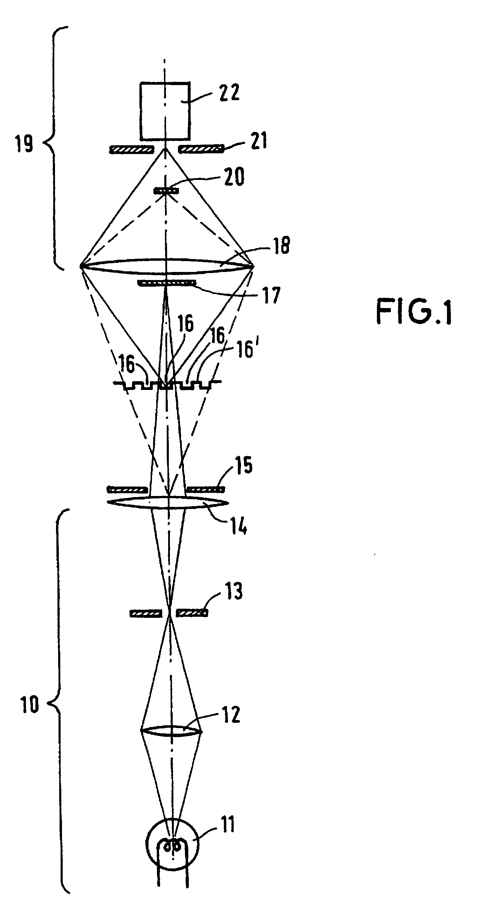

In Fig. 1 ist der Strahlengang beginnend mit der Beleuchtungsvorrichtung 10 dargestellt, die eine konventionelle Lichtquelle 11, z. B. eine Halogenlampe, und eine Illuminatorbaugruppe bestehend aus der Illuminatorlinse 12 und der Austrittslinse 14, einer zwischen diesen angeordneten Feldblende 13 und einer Austrittsöffnungsblende 15 aufweist. Die Lichtquelle 11 wird in die Feldblende 13 abgebildet. Die Feldblende 13 wird durch die Austrittslinse 14 auf ein Zentralabschattungselement 17 abgebildet. Dabei erfolgt die Einschränkung der Beleuchtungsvorrichtungsapertur durch deren Austrittsöffnungsblende 15.

Das Bild der Lichtquelle 11 bzw. Feldblende 13 auf dem Zentralabschattungselement 17 hat einen typischen Durchmesser von einigen Zehnteln eines Millimeters bis zu einigen wenigen Millimetern.

Das durch die Austrittsöffnungsblende 15 austretende Licht der Beleuchtungsvorrichtung 10 gelangt durch eine Probenflüssigkeit, die sich in einer oben offenen Kammer 16 einer Mikrotitterplatte 16' befindet. Die Mikrotitterplatte 16' ist in der zum Strahlengang senkrechten Ebene verfahrbar. Das die Probenflüssigkeit durchsetzende Licht gelangt auf die Eintrittslinse 18 einer Detektorvorrichtung 19, die der Beleuchtungsvorrichtung 10 gegenüberliegend auf dem Strahlengang (optische Achse) angeordnet ist.

In der Detektorvorrichtung 19 erfolgt durch deren Eintrittslinse 18 die Abbildung der Probe in eine unmittelbar vor dem Detektor 22 angeordneten Detektorblende 21, wodurch das Licht auf den Detektor 22 gelangt.

Die Austrittsöffnungsblende 15 der Beleuchtungsvorrichtung 10 wird von der Detektoreintrittslinse 18 auf ein weiteres Abschattungselement 20 abgebildet. Dadurch wird (Falsch-)Licht, welches direkt von der Beleuchtungsvorrichtung 10 kommt, ohne die Probe durchdrungen zu haben, vom Abschattungselement 20 absorbiert und kann die Messung nicht verfälschen. Der Detektor 22 empfängt also ausschließlich die Probe durchsetzendes (Streu-)Licht, da Direktlicht durch das Zentralbaschattungselement 17 und Falschlicht durch das weitere Abschattungselement 20 absorbiert wird.

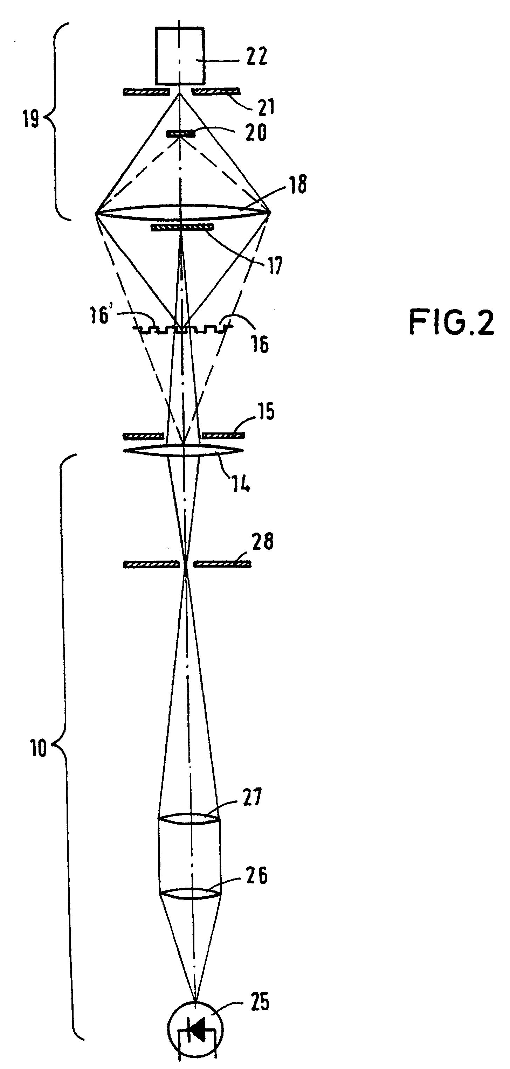

Bei einer alternativen Anordnung gemäß Fig. 2, in der der Anordnung gemäß Fig. 1 gleichende Bestandteile mit den gleichen Bezugszeichen versehen sind, wird als Lichtquelle ein Laser 25, z.B. ein Halbleiterlaser, gewählt. Diesem ist eine Kollimatorlinse 26 zugeordnet. Der so entstehende Laserkollimator erzeugt eine Laserstrahlung niedriger Divergenz, die auf eine Objektivlinse 27 auf der optischen Achse auftrifft, welche eine längere Brennweite als die Laserkollimatorlinse 26 aufweist, so daß ein vergrößertes Bild der Laserlichtquelle 25 in der Lochblende 28 der Beleuchtungsvorrichtung 10 entsteht. Die Lochblende 28 wirkt mit der Objektivlinse 27 als Raumfilter. Der Durchmesser solcher Lochblenden in der Anwendung als Raumfilter liegt im Bereich weniger Hundertstel eines Millimeters. Die Austrittslinse 14 der Beleuchtungsvorrichtung bildet nun diese Lochblende 28 auf das Zentralabschattungselement 17 ab. Dabei ist es möglich, vergleichsweise größere Abbildungsmaßstäbe und somit Abstände zwischen der Austrittsöffnungsblende 15 der Beleuchtungsvorrichtung 10 und dem Zentralabschattungselement 17 zu realisieren. Das gilt insbesondere auch bei kleineren Abschattungselementen als den bei konventioneller Beleuchtung möglichen. Die Austrittsöffnungsblende 15 der Beleuchtungsvorrichtung 10 wird wie in Fig. 1 auf das weitere Abschattungselement 20 abgebildet, das wie in Fig. 1 zwischen dem Detektor 22 und der Eintrittslinse 18 nahe deren Brennpunkt angeordnet ist. Ebenfalls wie bei der Anordnung gemäß Fig. 1 gilt auch bei Fig. 2, daß das Zentralabschattungselement 17 unmittelbar vor der Eintrittslinse 18 der Detektorvorrichtung 19 angeordnet ist.

Bei den beiden obigen Ausführungsbeispielen wird die Lichtquelle der Beleuchtungsvorrichtung direkt auf ein gut absorbierendes Zentralabschattungselement der hochaperturigen Detektoroptik der Detektorvorrichtung abbildet, während die Detektoroptik die Austrittsöffnungsblende der Beleuchtungsvorrichtung auf ein ebenfalls gut absorbierendes weiteres Abschattungselement im Bildraum der Detektoroptik abbildet.

Dies gelingt durch eine Anordnung zur optischen Strahlführung in einem Licht- oder Strahlungsmeßgerät, welches aus einer Einheit zur Bestrahlung der Probe und einer Detektoreinheit zum Messen der von der Probe emitierten oder reemitierten Strahlung besteht, derart, daß die Lichtquelle der Beleuchtungsvorrichtung auf ein zur Detektorvorrichtung gehöriges absorbierendes Element abgebildet wird und die Austrittsöffnungsblende der Beleuchtungsvorrichtung auf ein ebenfalls zur Detektorvorrichtung gehörendes bildseitig angeordnetes weiteres absorbierendes Element abgebildet wird.

Bekanntermaßen ist die Vorwärtsstreuung vieler Proben besonders stark, so daß es sinnvoll ist, die Zentralabschattung der Detektoroptik zu minimieren. Das gelingt, indem die Lichtquelle der Beleuchtungsvorrichtung oder eine dazu konjugierte Blende der Beleuchtungsvorrichtung auf dieses Abschattungselement abgebildet wird. Natürlich ist es weiterhin wichtig, daß dieses Abschattungselement das auftreffende Licht sehr gut absorbiert. Es ist also sinnvoll, hierzu schwarze Mattlacke zu nutzen, das Abschattungselement als trichterförmige Lichtfalle auszubilden oder aber bei streng monochromatischer Lichtstrahlung total absorbierende dielektrische Schichten bzw. extrem gut entspiegelte absorbierende Gläser zu verwenden.

Besonders klein kann das Zentralabschattungselement der Detektorvorrichtung gewählt werden, wenn als Lichtquelle ein Laser genutzt wird (Fig. 2).

Bei einer konventionellen Lichtquelle ist diese Anordnung so lange von Vorteil, wie der Bilddurchmesser kleiner als der Aperturkegeldurchmesser bleibt.

Gewöhnlich erhöht sich durch die Verkleinerung des Zentralabschattungselements der Einfluß der Hintergrundbeleuchtung. Ordnet man die Beleuchtungsvorrichtung jedoch so an, daß deren Austrittsöffnungsblende von der Detektoroptik auf einem Schirm, d. h. einem weiteren Abschattungselement im Bildraum der Detektoroptik abgebildet wird, so verringert sich der Anteil des Hintergrundsignals. Dieses weitere Abschattungselement befindet sich in dem von der Detektoroptik entworfenen Bild der Austrittsöffnungsblende der Beleuchtungsvorrichtung und somit zwischen dem Brennpunkt der Detektoroptik und der unmittelbar vor dem Detektor angeordneten Detektorblen-de. Günstig ist es, wenn das Aperturblendenbild der Beleuchtungsvorrichtung in der Nähe des Brennpunktes der Detektoroptik liegt. Das stark verkleinerte Bild der Aperturblende erfordert nur ein sehr kleines Abschattungselement, dessen Durchmesser den Aperturkegel, welcher auf den Detektor trifft, nicht beschneidet und somit die Empfindlichkeit nicht vermindert.

Man kann die Anordnung auch so beschreiben, daß die Austrittsöffnungsblende der Beleuchtungsvorrichtung weit außerhalb des Schärftentiefenbereichs der Detektoroptik liegen muß, was dadurch gelingt, daß die beiden Abbildungen derart verknüpft werden, daß die Schnittweite zwischen der Austrittsöffnungsblende der Beleuchtungsvorrichtung und der Eintrittslinsenanordnung der Detektorvorrichtung maximiert wird und somit der Bildpunkt der Austrittsöffnungsblende der Beleuchtungsvorrichtung sich dem Brennpunkt der Detektoroptik nähert. Auch hierbei zeigt sich der Einsatz eines Lasers von Vorteil, da eine solche lange Schnittweite bei einem kleinen Bild der Lichtquelle in der Abschattungsebene bei hoher Leuchtdichte problemlos möglich ist.

Es ist bei einer konventionellen Lichtquelle, z.B. einer Halogenlampe, von Vorteil, deren Bild in der Abschattungsebene durch eine innerhalb der Beleuchtungsvorrichtung liegende Blende scharf zu begrenzen (Fig. 1). Die dazu notwendige Zwischenabbildung trägt ebenfalls zur Verringerung des Hintergrundsignals bei.

Setzt man einen Laser als Lichtquelle ein, so entspricht diese Anordnung exakt einem Raumfilter, was zu einer extremen Reduzierung des Hintergrundsignals führt und somit den Laser weiter favorisiert (Fig. 2).

## Patentansprüche

1. Nephelometer zur optischen Erfassung des Streulichts einer mit Licht beaufschlagten Probe, mit
- einer Beleuchtungsvorrichtung (10) zum Beaufschlagen einer Probe mit Licht, wobei die Beleuchtungsvorrichtung (10) eine Lichtquelle (11;21), eine Austrittslinsenanordnung (14) und eine Austrittsöffnungsblende (15) aufweist, die in dieser Reihenfolge auf einer gemeinsamen, von der Lichtquelle (11;21) ausgehenden optischen Achse angeordnet sind, und
- einer Detektorvorrichtung (19) zum Erfassen des von der Probe ausgehenden Streulichts, wobei die Detektorvorrichtung (19) ein Zentralabschattungselement (17) zum Absorbieren von durch die Probe direkt hindurchtretendem und auf die Detektorvorrichtung (19) auftreffendem Licht der Lichtquelle (11;21), eine Detektoreintrittslinsenanordnung (18), ein zweites Abschattungselement (20) zum Absorbieren von direkt aus der Austrittsöffnungsblende (15) der Beleuchtungsvorrichtung (10) auf die Detektorvorrichtung (19) auftreffendem Licht der Lichtquelle (11;21) und einen Detektor (22) aufweist, die in dieser Reihenfolge auf der optischen Achse angeordnet sind,
- wobei die Austrittsöffnungsblende (15) der Beleuchtungsvorrichtung (10) und die Eintrittslinsenanordnung (18) sowie die beiden Abschattungselemente (17,20) der Detektorvorrichtung (19) derart angeordnet sind, daß sich das Zentralabschattungselement (17) in einer zur Lichtquelle (11; 21) konjugierten Ebene und das zweite Abschattungselement (20) in einer zur Austrittsöffnungsblende (15) konjugierten Ebene befinden.

2. Nephelometer nach Anspruch 1, **dadurch gekennzeichnet, daß** das zweite Abschattungselement (20) zwischen der Detektoreintrittslinsenanordnung (18) und dem Detektor (22) angeordnet ist, und zwar möglichst nahe dem Brennpunkt der Detektoreintrittslinsenanordnung (18).

3. Nephelometer nach Anspruch 1 oder 2, **dadurch gekennzeichnet, daß** das Zentralabschattungselement (17) unmittelbar vor der Detektoreintrittslinsenanordnung (18) positioniert ist.

4. Nephelometer nach einem der Ansprüche 1 bis 3, **dadurch gekennzeichnet, daß** zwischen der Lichtquelle (11) und der Austrittslinsenanordnung (14) der Beleuchtungsvorrichtung (10) eine interne Linsenanordnung (12;22,27) und eine Feldblende (13;28) angeordnet sind, wobei sich die Feldblende (53) in einer zur Lichtquelle (11) konjugierten Ebene befindet.

5. Nephelometer nach einem der Ansprüche 1 bis 3, **dadurch gekennzeichnet, daß** die Lichtquelle (21) ein Laser ist.

6. Nephelometer nach Anspruch 5, **dadurch gekennzeichnet, daß** die interne Linsenanordnung eine Kollimatorlinse (22) und eine Objektivlinse (27) aufweist und daß die Feldblende als Pinhole-Blende ausgebildet ist.

## Claims

1. Nephelometer for optically detecting scattered light from an illuminated sample, comprising
- an illumination device (10) for illuminating a sample, the illumination device (10) comprising a light source (11; 21), an exit lens arrangement (14) and an exit opening shutter (15) arranged, in this order, on a common optical axis originating in the light source (11; 21) and
- a detector device (19) for detecting the scattered light from the sample, the detector device (19) comprising a central shading element (17) for absorbing light directly passing through the sample from the light source (11; 21)and impinging on the detector device (19), a detector entrance lens arrangement (18), a second shading element (20) for absorbing light from the light source (11; 21) directly impinging on the detector device (19) from the exit opening shutter (15) of the illumination means (10) and a detector (22), which are arranged, in this order, on the optical axis,
- the exit opening shutter (15) of the illumination device (10) and the entrance lens arrangement (18) as well as the two shading elements (17, 20) of the detector device (19) being arranged such that the central shading element (17) is in a plane conjugate to the light source (11; 21) and the second shading element (20) is in a plane conjugate to the exit opening shutter (15).

2. Nephelometer according to claim 1, **characterized in that** the second shading element (20) is arranged between the detector entrance lens arrangement (18) and the detector (22), as close as possible to the focus of the detector entrance lens arrangement (18).

3. Nephelometer according to claim 1 or 2, **characterized in that** the central shading element (17) is positioned immediately in front of the detector entrance lens arrangement (18).

4. Nephelometer according to any one of claims 1 to 3, **characterized in that** an internal lens arrangement (12; 22, 27) and a field stop (13; 28) are arranged between the light source (11) and the exit lens arrangement (14) of the illumination device (10), the field stop (53) being arranged in a plane conjugate to the light source (11).

5. Nephelometer according to any one of claims 1 to 3, **characterized in that** the light source (21) is a laser.

6. Nephelometer according to claim 5, **characterized in that** the internal lens arrangement comprises a collimator lens (22) and an objective lens (27) and the field stop is formed as a pinhole stop.

## Revendications

1. Méphélomètre pour la détection optique de la lumière diffuse d'un échantillon exposé à la lumière, comportant
- un dispositif d'illumination (10) pour illuminer un échantillon avec de la lumière, le dispositif d'illumination (10) présentant une source de lumière (11; 21), un dispositif de sortie à lentille (14) et un écran ou diaphragme à ouverture de sortie (15), disposés dans cet ordre de succession sur un axe optique commun partant de la source de lumière (11; 21), et
- un dispositif détecteur (19) pour détecter la lumière diffuse émanant de l'échantillon, le dispositif détecteur (19) présentant un élément d'occultation central.(17) pour absorber la lumière, provenant de la source de lumière (11; 21) passant directement à travers l'échantillon et arrivant sur le dispositif détecteur (19), un dispositif d'entrée de détecteur à lentille (18), un deuxième dispositif d'occultation (20) pour absorber la lumière arrivant directement du diaphragme d'ouverture de sortie (15) du dispositif d'illumination (10) sur le dispositif détecteur (19) et venant de la source de lumière (11; 21) et présentant un détecteur (22), disposé dans cette ordre de succession sur l'axe optique,
- le diaphragme d'ouverture de sortie (15) du dispositif d'illumination (10) et le dispositif d'entrée à lentille (18) ainsi que les deux éléments d'occultation (17, 20) du dispositif détecteur (19) étant disposés de manière que l'élément d'occultation central (17) se trouve dans un plan conjugué par rapport à la source de lumière (11; 21) et que le deuxième élément d'occultation (20) se trouve dans un plan conjugué par rapport au diaphragme de sortie à ouverture (15).

2. Néphélomètre selon la revendication 1, **caractérisé en ce que** le deuxième élément d'occultation (20) est disposé entre le dispositif d'entrée de détecteur à lentille (18) et le détecteur (22) et précisément aussi prêt que possible du point focal du dispositif d'entrée de détecteur à lentille (18).

3. Néphélomètre selon la revendication 1 ou 2, **caractérisé en ce que** l'élément d'occultation central (17) est positionné directement avant le dispositif d'entrée de détecteur à lentille (18).

4. Néphélomètre selon l'une des revendications 1 à 3, **caractérisé en ce qu'**entre la source de lumière (11) et le dispositif de sortie à lentille (14) du dispositif d'illumination (10) sont disposés un dispositif à lentille interne (12; 22, 27) et un diaphragme de champ (13; 26), le diaphragme de champ (53) se trouvant dans un plan conjugué par rapport à la source de lumière (11).

5. Néphélomètre selon l'une des revendications 1 à 3, **caractérisé en ce que** la source de lumière (21) est un laser.

6. Néphélomètre selon la revendication 5, **caractérisé en ce que** le dispositif à lentille interne présente une lentille de collimation (22) et une lentille d'objectif (27) et **en ce que** le diaphragme de champ est réalisé sous la forme de diaphragme à trou d'épingle.
